# EUROPÄISCHE PATENTSCHRIFT

(11) **EP 2 425 513 B1**
(45) Veröffentlichungstag und Bekanntmachung des Hinweises auf die Patenterteilung: **12.09.2018**
(21) Anmeldenummer: 09776602.6
(22) Anmeldetag: 27.04.2009
(51) Int. Cl.: H02M 7/483, H02J 3/32, H02J 3/18

(54) **SUBMODUL FÜR EINEN MEHRSTUFIGEN UMRICHTER MIT ZUSÄTZLICHEM ENERGIESPEICHER**
CELL MODULE WITH ADDITIONAL ENERGY STORAGE FOR A MODULAR MULTILEVEL CONVERTER
MODULE AVEC UN DISPOSITIF DE STOCKAGE D'ÉNERGIE ÉLECTRIQUE SUPPLÉMENTAIRE POUR UN CONVERTISSEUR MULTI-NIVEAUX MODULAIRE

(43) Veröffentlichungstag der Anmeldung: 07.03.2012
(73) Patentinhaber: Siemens Aktiengesellschaft, 80333 München (DE)
(72) Erfinder: PEREIRA, Marcos, 91056 Erlangen (DE)
(86) Internationale Anmeldenummer: PCT/EP2009/003352
(87) Internationale Veröffentlichungsnummer: WO 2010/124706

(56) Entgegenhaltungen:
- WO-A1-2007/028349
- WO-A1-2009/033506
- US-A- 6 002 220
- BARAN M E ET AL: "STATCOM with energy storage for smoothing intermittent wind farm power" POWER AND ENERGY SOCIETY GENERAL MEETING - CONVERSION AND DELIVERY OF ELECTRICAL ENERGY IN THE 21ST CENTURY, 2008 IEEE, IEEE, PISCATAWAY, NJ, USA, 20. Juli 2008 (2008-07-20), Seiten 1-6, XP031304334 ISBN: 978-1-4244-1905-0
- Eckroad, S.: "FACTS With Energy Storage:Conceptual Design Study" EPRI - Electric Power Research Institute 6. Dezember 2006 (2006-12-06), XP002597520 Gefunden im Internet: URL:http://mydocs.epri.com/docs/public/TR- 111093.pdf [gefunden am 2010-08-20]
- LECH M GRZESIAK ET AL: "Autonomous Power Generating System with Multi-Level Converters" IEEE INDUSTRIAL ELECTRONICS, IECON 2006 - 32ND ANNUAL CONFERENCE ON, IEEE, PISCATAWAY, NJ, USA, 1. November 2006 (2006-11-01), Seiten 2815-2820, XP031077389 ISBN: 978-1-4244-0135-2

## Beschreibung

Die Erfindung betrifft ein Submodul zur Ausbildung eines mehrstufigen Umrichters für die Elektroenergieverteilung und -übertragung mit einer Kondensatoreinheit und einer Leistungshalbleiterschaltung, die abschaltbare Leistungshalbleiter aufweist, wobei die Kondensatoreinheit und die Leistungshalbleiterschaltung so miteinander verbunden sind, dass je nach Ansteuerung der Leistungshalbleiter der Leistungshalbleiterschaltung wenigstens die an der Kondensatoreinheit abfallende Spannung oder eine Nullspannung an Ausgangsklemmen des Submoduls erzeugbar ist.

Die Erfindung betrifft ferner ein Stromrichterventil mit einem solchen Submodul sowie einem Umrichter mit einem solchen Stromrichterventil.

Ein solches Submodul und ein solches Stromrichterventil beziehungsweise ein solcher Umrichter sind aus der WO 2007/ 028349 A1 bereits bekannt. Dort ist ein so genannter modularer Multilevelumrichter beschrieben, der aus Phasenmodulen zusammengesetzt ist. Jedes Phasenmodul erstreckt sich zwischen zwei Gleichspannungsanschlüssen und weist einen Wechselspannungsanschluss auf. Zwischen jedem Gleichspannungsanschluss und dem Wechselspannungsanschluss ist ein Phasenmodulzweig ausgebildet, so dass jedes Phasenmodul über zwei zueinander in Reihe geschaltete Phasenmodulzweige verfügt. Jeder Phasenmodulzweig besteht aus einer Reihenschaltung von Submodulen, die eine so genannte Halbbrückenschaltung ausbilden. Um die im Bereich der Energieübertragung geforderten hohen Spannung aufnehmen zu können, besteht ein Phasenmodulzweig Üblicherweise aus über hundert Submodulen, von denen jeweils ein Submodul seinen eigenen Kondensator aufweist. Weiterhin ist darauf hingewiesen, dass die Submodule auch mit einem zusätzlichen Energiespeicher ausgerüstet werden können.

Mit dem Beitrag von Baran M. E. et al "STATCOM with Energy Storagy for Smoothing Intermittent Wind Farm Power", erschienen in Power and Energy Society General Meeting, Conversion and Delivery of Electrical Energy in the 21th Century, 2008, IEEE, IEEE Piscataway, NJ, USA, 20. Juli 2008, Seiten 1 bis 6 (D2) ist ein STATCOM offenbart, der in Parallelschaltung an ein Wechselspannungsnetz geschaltet wird. De so mit dem Wechselspannungsnetz verbundene STATCOM kann beispielsweise zur Blindleistungskondensation eingesetzt werden und verfügt ebenfalls über Phasenmodule, die aus Submodulen zusammengesetzt sind. Jedes Submodul verfügt über einen Energiespeicher sowie eine Leistungshalbleiterschaltung, die so ausgestaltet ist, dass an den beiden Klemmen eines jeden Submoduls entweder die an dem Energiespeicher abfallende Spannung oder aber eine Nullspannung erzeugbar ist. Die Phasenmodulzweige sind in einer Dreiecksschaltung miteinander verschaltet. Darüber hinaus ist in der D2 erwähnt, dass die Submodule einen Zusatzenergiespeicher aufweisen können, wobei der Zusatzenergiespeicher über eine mechanische Schalteinheit dem Energiespeicher parallel geschaltet werden kann.

Aus dem Beitrag von Eckroad, S.: "FACTS with Energy Storage: Conceptual Design Study", EPRI - Electric Power Research Insitute vom 6. Dezember 2006, Internet URL:http://mydocs.epri.com/docs/public/TR-111093.pdf (D3) ist ein so genannter Zweistufen-Umrichter offenbart, der über einen Zweiquadrantensteller mit dem zentralen Zwischenkreiskondensator verbunden ist. Der zentrale Zwischenkreiskondensator ist an die Gleichspannungsanschlüsse des Zweistufen-Umrichters angeschlossen, deren Topologie nicht dargestellt ist. Der Zweiquadrantensteller weist eine Reihenschaltung zweier ein- und abschaltbarer Leistungshalbleiterschalter, in diesem Falle GTOs, auf, wobei der Potenzialpunkt zwischen den beiden Leistungshalbleiterschaltern über eine Induktivität mit dem Zusatzenergiespeicher verbunden ist. Aufgrund der Orientierung der Leistungshalbleiterschalter und deren Freilaufdioden muss die am Zusatzenergiespeicher abfallende Spannung gemäß der D3 immer niedriger sein als die Spannung, die am zentralen Zwischenkreiskondensators abfällt.

Aus dem Aufsatz "Full Range Active AC Filter with Multilevel IGBT Converter for Transmission and Distribution Systems" von M. Pereira, A. Zenkner und A. L. P. de Oliveira, der auf der 2008 bei IEEE PES T&D Conference and Exposition in Latein Amerika, Bogota, zwischen dem 13.-15. August präsentiert wurde, ist ein mehrstufiger Umrichter für die Elektroenergieverteilung und -übertragung bekannt. Der dort beschriebene Umrichter ist zur aktiven Filterung von harmonischen Oberschwingungen der Netzspannungsgrundfrequenz mit einer Wechselstrom führenden Hochspannungsstromleitung verbunden, wobei für jede Phase der Hochspannungsleitung ein Stromrichterventil vorgesehen ist, welches über eine Sternschaltung mit den übrigen Stromrichterventilen des Stromrichters verbunden ist. Dabei besteht jedes Stromrichterventil aus einer Reihenschaltung von Submodulen, wobei jedes Submodul eine Kondensatoreinheit und eine Leistungshalbleiterschaltung aufweist. Die Leistungshalbleiterschaltung bildet eine so genannte Vollbrücke aus. An den Ausgangsklemmen eines jeden Submoduls ist daher entweder die an der Kondensatoreinheit abfallende Kondensatorspannung, eine Nullspannung oder die inverse Kondensatorspannung erzeugbar. Der Vorrichtung haftet der Nachteil an, dass in den Kondensatoreinheiten der Submodule nur eine begrenzte Energiemenge gespeichert werden kann. Aus diesem Grunde eignet sich der vorbekannte Umrichter ausschließlich zur Blindleistungskompensation.

Aus der US 3,867,643 ist ein Umrichter bekannt, dessen Ventilzweige ebenfalls aus einer Reihenschaltung von Submodulen besteht, wobei jedes Submodul eine Leistungshalbleiterschaltung und einen Energiespeicher aufweist. Aufgrund der Energiespeicher ist der Umrichter in der Lage, Wirkleistung in ein angeschlossenes Netz einzuspeisen. Er ist jedoch nicht zur Blindleistungskompensation geeignet, da die als Energiespeicher zum Einsatz gelangenden Batterien nicht für die hohen Ströme eingerichtet sind, die bei der Blindleistungskompensation auftreten können. Die hohen Ströme hätten eine Beschädigung der Batterien im Gefolge.

Aus der Patentschrift US 6,002,220 ist ein elektrischer Energiespeicher für eine Klimaanlage bekannt. Dieser Energiespeicher wird nachts, wenn der allgemeine Energiebedarf gering ist, aufgeladen. Am Tag wird die gespeicherte Energie genutzt, um die Klimaanlage zu betreiben. Der Energiespeicher ist als eine Batterie ausgestaltet, die die gespeicherte elektrische Energie über einen Chopper an die Klimaanlage abgeben kann.

Aufgabe der Erfindung ist es daher, einen Umrichter der eingangs genannten Art bereitzustellen, der neben der Kompensation von Blindleistung auch in der Lage ist, Wirkleistung mit einem Wechselstrom führenden Hochspannungsnetz auszutauschen, mit dem der Umrichter verbunden ist. Die Erfindung löst diese Aufgabe durch eine Vorrichtung gemäß Anspruch 1.
Alle technischen Merkmale des unabhängigen Anspruchs sind erforderlich und nicht optional, unabhängig von möglicherweise widersprechenden Aussagen in den folgenden Textpassagen.
Bevorzugte Ausführungsformen werden in den abhängigen Ansprüchen beschrieben.

Die Erfindung löst diese Aufgabe durch einen Zusatzenergiespeicher, der über eine Choppereinheit mit der Kondensatoreinheit verbunden ist, wobei die Choppereinheit Mittel zum Regeln des Stromflusses zwischen der Kondensatoreinheit und dem Zusatzenergiespeicher aufweist, wobei die Choppereinheit einen elektronischen Schalter und eine in Reihe zum elektronischen Schalter angeordnete Induktiveinheit aufweist und wobei der elektronische Schalter zwei abschaltbare Leistungshalbleiter aufweist, die in Reihe zueinander angeordnet und eine gegensinnige Stromdurchlassrichtung aufweisen.

Erfindungsgemäß ist ein Submodul für ein Stromrichterventil eines Umrichters bereitgestellt, der zur Verbindung mit einer Hochspannungsleitung vorgesehen ist. Die Verbindung kann entweder direkt oder aber auch über einen Transformator, eine Spule oder einen Kondensator erfolgen. Das erfindungsgemäße Stromrichterventil, das auch als Phasenmodul- oder Ventilzweig bezeichnet werden kann, weist mehrere erfindungsgemäße Submodule auf, die in Reihe geschaltet sind. Der aus mehreren Stromrichterventilen zusammengesetzte Umrichter ist daher ein Mehrstufenumrichter. Durch zweckmäßige Ansteuerung der Leistungshalbleiter der Submodule kann die an dem Stromrichterventil erzeugte Spannung stufenweise verändert werden. Dabei entspricht die an der Kondensatoreinheit abfallende Spannung der Höhe der Stufen.

Die Leistungshalbleiterschaltung ist mit einer Regelungseinheit verbunden, die über zweckmäßige Ansteuersignale zur Regelung der Leistungshalbleiter der Leistungshalbleiterschaltung eingerichtet ist. Neben der Kondensatoreinheit verfügt jedes Submodul erfindungsgemäß über einen Zusatzenergiespeicher, der über eine Choppereinheit mit der Kondensatoreinheit verbunden ist. Die Choppereinheit ist zur Regelung des Stromflusses zwischen der Kondensatoreinheit und dem Zusatzenergiespeicher vorgesehen. Mit anderen Worten ist es im Rahmen der Erfindung möglich, den Zusatzenergiespeicher vor zu großen Strömen sicher abzuschirmen. Während des Betriebs des Submoduls sind sowohl die Kondensatoreinheit als auch der Zusatzenergiespeicher mit Elektroenergie geladen. Bei Normalbetrieb des Umrichters ist die Kondensatoreinheit allein fähig Blindleistung mit dem Wechselspannungsnetz auszutauschen, wobei die abschaltbaren Leistungshalbleiter zweckmäßig geschaltet oder mit anderen Worten getaktet werden. Ist der Zusatzenergiespeicher vollständig mit Elektroenergie geladen, unterbricht die Choppereinheit einen Stromfluss zwischen Zusatzenergiespeicher und Kondensatoreinheit in zumindest einer Richtung, so dass der Zusatzenergiespeicher vor schädliche Stromspitzen geschützt ist. Ist eine Zufuhr von Wirkleistung von dem Umrichter in das angeschlossene Wechselspannungsnetz erforderlich, sinkt die Spannung am Zwischenkreiskondensator ab. Die Choppereinheit sorgt nun dafür, dass Elektroenergie von dem Zusatzenergiespeicher zur Kondensatoreinheit fließt, so dass die an der Kondensatoreinheit abfallende Spannung über eine bestimmte Zeitdauer hinweg aufrecht erhalten wird. Auf diese Weise ist ein wirksames Mittel zur Vermeidung von Spannungseinbrüchen in einem angeschlossenen Wechselspannungsnetz oder einem Windpark möglich. Ferner ist die Bekämpfung so genannter Flicker von Lichtbögenofen erleichtert.

Erfindungsgemäß weist die Choppereinheit einen elektronischen Schalter und eine in Reihe zum elektronischen Schalter angeordnete Induktiveinheit auf. Elektronische Schalter weisen wenigstens einen Leistungshalbleiter auf, der für die im Bereich der Energieübertragung und -verteilung herrschenden Hochspannungen ausgelegt ist. Mit Hochspannungen sind hier Spannungen oberhalb von 1 kV gemeint. Als Induktiveinheiten kommen Spulen oder sonstige Bauteile mit induktivem Verhalten in Betracht.

Elektronische Schalter, die auch Halbleiterschalter genannt werden, sind dem Fachmann bestens bekannt. Sie verfügen über ansteuerbare Leistungshalbleiter, wie Thyristoren oder dergleichen. Vorteilhafterweise weist der elektronische Schalter jedoch abschaltbare Leistungshalbleiter wie GTOs, IGBTs oder dergleichen auf. Abschaltbare Leistungshalbleiter können nicht nur aktiv in einen leitenden Zustand überführt werden. Es ist darüber hinaus auch möglich, abschaltbare Leistungshalbleiter durch ein Steuersignal von einem leitenden in einen nicht leitenden Zustand zu überführen. Um das Auftreten von hohen Stromspitzen beispielsweise beim Einschalten des elektronischen Speichers zu vermeiden, ist die Induktiveinheit in Reihe zum elektronischen Schalter geschaltet, so dass der über den elektronischen Schalter fließende Strom in seiner Amplitude begrenzt ist.

Erfindungsgemäß umfasst der elektronische Schalter wenigstens einen abschaltbaren Leistungshalbleiter, dem eine Freilaufdiode gegensinnig parallel geschaltet ist. Wie bereits weiter oben ausgeführt wurde, kommen als abschaltbare Leistungshalbleiter IGBTs, GTOs oder dergleichen in Betracht. Ein solcher Leistungsableiter kann den Strom nur in einer Richtung leiten. Damit der Schalter Strom in beiden Richtungen leiten kann, ist eine gegensinnig parallel zum Leistungshalbleiter geschaltete Freilaufdiode vorgesehen. Fließt der Strom in einer ersten Richtung durch den steuerbaren Leistungshalbleiter, fließt er in Gegenrichtung durch die Freilaufdiode. Die Freilaufdiode hat darüber hinaus die Eigenschaft, den abschaltbaren oder steuerbaren Leistungshalbleiter vor Spannungen mit ungekehrter Polarität, die z.B. bei Transistoren nicht zulässig sind, zu schützen.

Um den Stromfluss zwischen Kondensatoreinheit und Zusatzenergiespeicher in beiden Richtungen regeln zu können, umfasst der elektronische Schalter gemäß der Erfindung zwei abschaltbare Leistungshalbleiter, die in Reihe zueinander angeordnet sind und gegensinnige Stromdurchlassrichtungen aufweisen. Jedem der beiden abschaltbaren Leistungshalbleiter ist wieder eine Freilaufdiode gegensinnig parallel geschaltet. Die beiden parallel geschalteten Freilaufdioden weisen daher auch gegensinnige Stromdurchlassrichtungen auf. Durch die Reihenschaltung gegensinnig orientierter Leistungshalbleiter ist daher möglich den Stromfluss in beide Richtungen gezielt zu unterbrechen. Somit kann nicht nur das Aufladen des Zusatzenergiespeichers, sondern auch die Abgabe von Wirkleistung im Bedarfsfall gezielt geregelt werden.

Gemäß einer vorteilhaften Weiterentwicklung der Erfindung ist der Zusatzenergiespeicher parallel zur Kondensatoreinheit geschaltet. Der parallel geschaltete Zusatzenergiespeicher kann auf einfache Weise über die Choppereinheit mit der Kondensatoreinheit verbunden werden.

Zweckmäßigerweise ist eine Regelung vorgesehen, die mit den ansteuerbaren Leistungshalbleitern des elektronischen Schalters über Steuerleitungen verbunden ist. Die besagte Regelungseinheit stellt zweckmäßige Steuersignale für die Leistungshalbleiter bereit.

Gemäß einer diesbezüglich zweckmäßigen Weiterentwicklung ist wenigstens eine der Freilaufdioden auch der Induktiveinheit parallel geschaltet. Bei dieser Auslegung der Choppereinheit fließt der Diodenstrom nicht durch die Induktiveinheit. Dies kann bei der Auslegung der Choppereinheit vorteilhaft sein.

Gemäß einer zweckmäßigen Weiterentwicklung der Erfindung weist der elektronische Schalter einen abschaltbaren Leistungshalbleiter auf, wobei die Induktiveinheit in Durchlassrichtung des besagten Leistungshalbleiters dem elektronischenSchalter nachgeschaltet ist. Ein zu schnelles Ansteigen des Durchlassstromes nach dem Einschalten des Leistungshalbleiters wird so vermieden.

Gemäß einer diesbezüglich zweckmäßigen Weiterentwicklung ist die Induktiveinheit zwischen dem elektronischen Schalter und dem Zusatzenergiespeicher angeordnet. Dabei kann die Freilaufdiode neben dem gegensinnigen Leistungshalbleiter auch parallel zu Induktiveinheit angeordnet sein. Gemäß dieser Variante fließt ein über die Freilaufdiode fließender Diodenstrom von dem Zusatzenergiespeicher zur Kondensatoreinheit. Die Spannung in dem Zusatzenergiespeicher kann daher nicht größer werden als die an der Kondensatoreinheit abfallende Spannung.

Zweckmäßigerweise ist die Leistungshalbleiterschaltung eine Vollbrückenschaltung, die vier abschaltbare Leistungshalbleiter aufweist, den jeweils eine Freilaufdiode gegensinnig parallel geschaltet ist. Solche Vollbrückenschaltungen von Leistungshalbleitern, die mit einer Kondensatoreinheit verknüpft sind, werden auch als H-Brücke bezeichnet. Der Aufbau einer solchen Vollbrücke ist dem Fachmann bestens bekannt, so dass an dieser Stelle nicht ausführlich darauf eingegangen werden muss. Es sei jedoch angemerkt, dass an den Ausgangsklemmen des Submoduls, das eine Vollbrückenschaltung aufweist, die an der Kondensatoreinheit abfallende Kondensatorspannung, eine Nullspannung oder die inverse Kondensatorspannung erzeugbar ist.

Gemäß einer Variante hierzu ist die Leistungshalbleiterschaltung als so genannte Halbbrückenschaltung realisiert, die zwei abschaltbare Leistungshalbleiter aufweist, denen jeweils eine Freilaufdiode gegensinnig parallel geschaltet ist. Eine solche Halbbrücke ist beispielsweise aus der DE 101 03 031 A1 bekannt. Gemäß dieser vorteilhaften Ausgestaltung der Erfindung sind die beiden abschaltbaren Leistungshalbleiter mit gleicher Stromdurchlassrichtung in Reihe angeordnet, wobei jedem abschaltbaren Leistungshalbleiter eine gegensinnig parallel geschaltete Freilaufdiode zugeordnet ist. Die Reihenschaltung aus Leistungshalbleitern ist der Kondensatoreinheit parallel geschaltet, wobei eine Ausgangsklemme des Submoduls direkt mit dem Kondensator verbunden ist. Die andere Anschlussklemme des Submoduls ist hingegen mit dem Potenzialpunkt zwischen den Leistungshalbleitern beziehungsweise zwischen den Freilaufdioden verbunden. Gemäß dieser Schaltung ist somit entweder die an der Kondensatoreinheit abfallende Spannung oder aber eine Nullspannung, nicht hingegen die inverse Kondensatorspannung an den Anschlussklemmen des Submoduls erzeugbar. Diese Halbbrückenschaltung wird in Fachkreisen auch als Marquardt-Schaltung bezeichnet.

Vorteilhafterweise weist die Choppereinheit eine Regelungseinheit auf, die mit Messsensoren zur Erfassung einer an dem Zusatzenergiespeicher und an dem Kondensator abfallende Spannung eingerichtet sind. Gemäß dieser vorteilhaften Weiterentwicklung kann die Regelung des Stromflusses zwischen Zusatzenergiespeicher und Kondensatoreinheit so erfolgen, dass bei abfallender Spannung an der Kondensatoreinheit beispielsweise aufgrund eines Netzfehlers im angeschlossenen Hochspannungsnetz der Zusatzenergiespeicher geregelte Wirkleistung bereitstellt.

Wie bereits weiter oben ausgeführt wurde, ist das erfindungsgemäße Submodul mit identisch aufgebauten Submodulen in Reihe geschaltet, wodurch ein Stromrichterventil oder ein Phasenmodulzweig eines Umrichters bereitgestellt ist. Jeder Phasenmodulzweig oder jedes Stromrichterventil ist beispielsweise mit einer Phase einer Hochspannungsleitung eines Stromversorgungsnetzes verbunden, wobei die Stromrichterventile untereinander in einer Dreiecksschaltung miteinander verknüpft sind. Auf diese Weise ist ein Umrichter für die Elektroenergieverteilung und -übertragung bereitgestellt, der auch als Statcom, SVC-PLUS oder SVC-Light bezeichnet wird. Selbstverständlich ist es im Rahmen der Erfindung auch möglich, jedes Stromrichterventil oder mit anderen Worten jedes Phasenmodul über Koppelkondensatoren oder Koppelinduktivitäten oder über Transformatoren mit der Hochspannungsleitung zu verbinden. Darüber hinaus ist es auch selbstverständlich möglich die Stromrichterventile untereinander in einer Sternschaltung zu verbinden.

Die Hochspannungsleitung weist zweckmäßigerweise eine Spannung von über 10 kV auf. In der folgenden Beschreibung wurde der Ausdruck "Ausführungsform", bzw. "Ausführungsbeispiel" möglicherweise für Gegenstände benutzt, die nicht in den Schutzumfang der Ansprüche fallen. Nur Beispiele, die alle Merkmale des unabhängigen Anspruchs enthalten, sind Teil der Erfindung und damit "Ausführungsformen", bzw. "Ausführungsbeispiele". Teile der Beschreibung die nicht in den Schutzumfang der Ansprüche fallen stellen den Stand der Technik dar und/oder dienen dem Verständnis der Erfindung.

Weitere zweckmäßige Ausgestaltungen und Vorteile der Erfindung sind Gegenstand der nachfolgenden Beschreibung von Ausführungsbeispielen der Erfindung unter Bezug auf die Figuren der Zeichnung, wobei gleiche Bezugszeichen auf gleich wirkende Bauteile verweisen und wobei
- Figur 1: ein Ausführungsbeispiel des erfindungsgemäßen Submoduls sowie ein Ausführungsbeispiel des erfindungsgemäßen Stromrichterventils,
- Figuren 2,3, 4 und 5: verschiedene Ausführungsformen einer Choppereinheit und
- Figur 5: ein weiteres Ausführungsbeispiel des erfindungsgemäßen Submoduls und des erfindungsgemäßen Stromrichterventils zeigen.

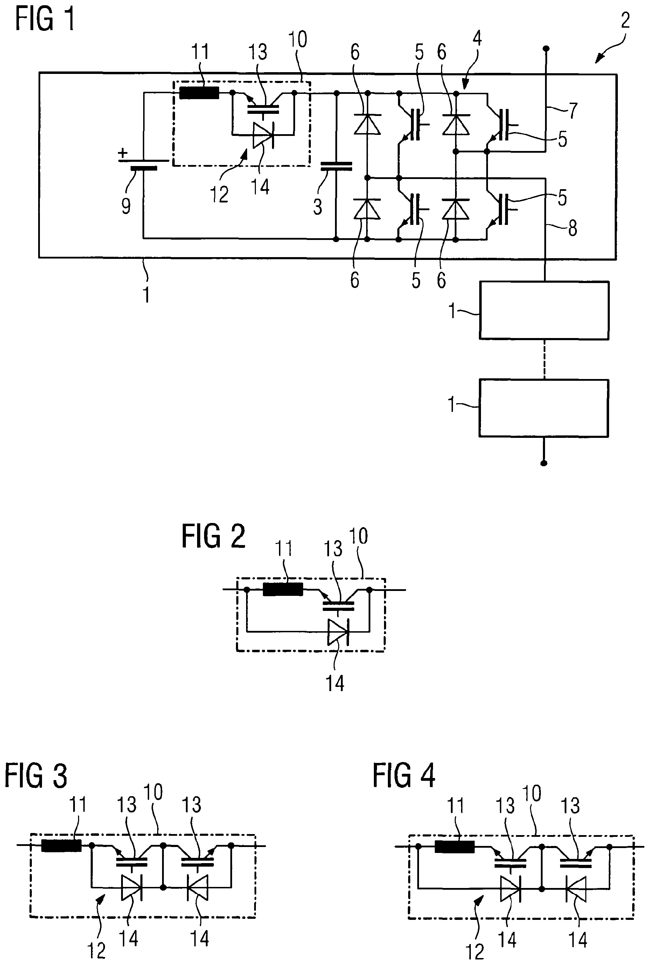

Figur 1 zeigt eine Reihenschaltung von Ausführungsbeispielen des erfindungsgemäßen Submoduls 1, wobei die Reihenschaltung ein erfindungsgemäßes Stromrichterventil 2 ausbildet. Die Anzahl der Submodule des Stromrichterventils 2 ist von der anliegenden Spannung abhängig. Je größer die an dem Stromrichterventil anliegende Spannung, desto größer ist auch die Anzahl der Submodule 1. Diese variable Anzahl soll mit der gestrichelten Verbindungslinie zwischen den unteren Submodulen 1 dargestellt werden.

Aus Gründen der Übersicht ist in Figur 1 der Aufbau eines einzigen Submoduls verdeutlicht. Die übrigen Submodule 1 sind jedoch identisch aufgebaut.

Es ist erkennbar, dass jedes Submodul 1 eine Kondensatoreinheit 3 sowie eine Leistungshalbleiterschaltung 4 aufweist, die im gezeigten Ausführungsbeispiel parallel zur Kondensatoreinheit 3 angeordnet ist. Die Leistungshalbleiterschaltung 4 umfasst vier abschaltbare Leistungshalbleiter 5, die zu einer so genannten Vollbrücke miteinander verschaltet sind. Dabei ist jedem abschaltbaren Leistungshalbleiter 5, der in dem gewählten Ausführungsbeispiel als IGBT realisiert ist, eine gegensinnige Freilaufdiode 6 parallel geschaltet. Die vier IGBTs 5 können durch eine in Figur 1 nicht gezeigte Umrichterregelung von einer Sperrstellung, in der ein Stromfluss über die IGBTs 5 unterbrochen ist, in eine Durchgangsstellung überführt werden, in der ein Stromfluss über die IGBTs ermöglicht ist. Ferner ist die Überführung von der Durchgangsstellung in die Sperrstellung, also ein Abschalten mittels der Steuersignale möglich. Zur Ansteuerung sind die abschaltbaren Leistungshalbleiter 5 mit der Umrichterregelung über nicht gezeigte Ansteuerleitungen verbunden. In Abhängigkeit der Ansteuersignale kann daher die an der Kondensatoreinheit 3 abfallende Spannung U_{C} an Ausgangsklemmen 7 und 8 erzeugt werden, eine Nullspannung oder aber die inverse Spannung der Kondensatoreinheit -U_{C}. Aufgrund des kaskadierten Aufbaus eines Stromrichterventils können mehrere Spannungsstufen an dem Ausgang des Stromrichterventils 2 erzeugt werden, so dass beispielsweise der Verlauf einer Wechselspannung stufenweise nachgebildet werden kann.

Wegen der begrenzten Energiemenge, die in der Kondensatoreinheit gespeichert werden kann, war mit gattungsgemäßen Stromrichterventilen ausschließlich die Kompensation von Blindleistung möglich. Um im Bedarfsfall auch Wirkleistung in ein angeschlossenes Versorgungsnetz einspeisen zu können, ist ein Zusatzenergiespeicher 9 vorgesehen, der über eine Choppereinheit 10 mit der Kondensatoreinheit 3 verbunden ist. Der Zusatzenergiespeicher 9 ist beispielsweise eine Batterie, ein Superkondensator oder ein Elektrolitkondensator.

Die Choppereinheit 10 weist eine Induktiveinheit 11 sowie einen elektronischen Schalter 12 in Reihe zur Induktiveinheit 11 auf. Auf diese Weise sind hohe Stromspitzen beim Einschalten des elektronischen Schalters 12 vermieden.

Der elektronische Schalter 12 ist in dem in Figur 1 gezeigten Ausführungsbeispiel durch einen abschaltbaren Leistungshalbleiter 13, in diesem Falle einen IGBT, sowie eine gegensinnig parallel zum Leistungshalbleiter 13 geschaltete Freilaufdiode 14 realisiert. Die Freilaufdiode 14 ist jedoch nicht parallel zu der Induktiveinheit 11 geschaltet. Aus diesem Grunde fließt der über die Freilaufdiode 14 fließende Strom auch über die Induktiveinheit 11 und wird auf diese Weise ebenfalls begrenzt. Der IGBT 13 ist wieder über eine figürlich nicht dargestellte Steuerleitung mit einer nicht dargestellten Regeleinheit verbunden, die zwei ebenfalls nicht verdeutlichte Messsensoren aufweist, welche die an dem Zusatzenergiespeicher 9 und an der Kondensatoreinheit 3 abfallende Spannung erfassen.

Im Folgenden wird die Funktionsweise des in Figur 1 dargestellten Ausführungsbeispiels erläutert. Durch Anlegen einer Wechselspannung an den Umrichter beziehungsweise an das in Figur 1 dargestellte Stromrichterventil 2, deren Amplitude beispielsweise 20 kV beträgt, lädt sich zunächst die Kondensatoreinheit 3 der Submodule 1 auf. Die Leistungshalbleiter 5 der Leistungshalbleiterschaltung 4 können nun getaktet werden, um wie beim Stand der Technik unerwünschte Blindleistung im angeschlossenen Stromversorgungsnetz zu kompensieren. Der Zusatzenergiespeicher 9 kann zwar grundsätzlich schon vorher geladen sein. In dem in Figur 1 gezeigten Ausführungsbeispiel findet die Aufladung des Zusatzenergiespeichers 9 jedes Submoduls 1 jedoch geregelt mit Hilfe der Choppereinheit 10 statt. Ist das Aufladen des Zusatzenergiespeichers 9 beendet, überführt die figürlich nicht dargestellte Chopperregelung die Choppereinheit 10 in eine Sperrstellung, in der ein Stromfluss über den Leistungshalbleiter 13 unterbrochen ist. In der Sperrstellung ist die an dem Zusatzenergiespeicher 9 abfallende Spannung kleiner als die Spannung des zwischen der Kondensatoreinheit 3. Ein Stromfluss vom Zusatzenergiespeicher 9 über die Freilaufdiode 14 zur Kondensatoreinheit 3 ist somit nicht möglich. Es tritt bei Normalbetrieb des Stromrichterventils 2 keine Verlustleistung auf. Ein hoher Stromfluss, der beispielsweise bei der Blindleistungskompensation auftritt, fließt aufgrund der Sperrstellung der Choppereinheit 10 lediglich in die Kondensatoreinheit 3, nicht jedoch in den gegenüber hohen Strömen empfindlichen Zusatzenergiespeicher 9.

Sinkt die Spannung im angeschlossenen Versorgungsnetz z.B. aufgrund einer Störung am Netz ab, wird Wirkleistung von der Kondensatoreinheit 3 in das angeschlossene Versorgungsnetz überführt, wobei die Spannung an der Kondensatoreinheit 3 absinkt. Wird die Spannung an der Kondensatoreinheit 3 kleiner als die an dem Zusatzenergiespeicher 9 abfallende Spannung, fließt Strom aus dem Zusatzenergiespeicher 9 über die Freilaufdiode 14 zurück in die Kondensatoreinheit 3. Mit anderen Worten stellt der Zusatzenergiespeicher 9 Wirkleistung für die Kondensatoreinheit 3 bereit, die diese dann an das Versorgungsnetz abgeben kann.

Ist die Netzstörung behoben, kann der Zusatzenergiespeicher 9 wieder geregelt aufgeladen werden.

Figur 2 zeigt eine alternative Ausgestaltung der Choppereinheit 10. Es ist erkennbar, dass die Freilaufdiode 14 nicht nur parallel zum abschaltbaren Leistungshalbleiter 13 sondern vielmehr auch parallel zur Induktiveinheit 11 geschaltet ist. Mit anderen Worten ist die Freilaufdiode 14 parallel zur Reihenschaltung aus Induktiveinheit 11 und abschaltbarem Leistungshalbleiter 13 angeordnet. Der Strom von dem Zusatzenergiespeicher 9 zur Kondensatoreinheit 3 fließt somit nicht über die Induktiveinheit 11, sondern ausschließlich über die Freilaufdiode 14.

In dem Ausführungsbeispiel der Choppereinheit 10 gemäß Figur 3 umfasst der elektronische Schalter 12 zwei abschaltbare Leistungshalbleiter 13, die in Reihe zueinander geschaltet sind, und deren Stromdurchlassrichtung in entgegengesetzte Richtung weisen. Dabei ist jedem abschaltbaren Leistungshalbleiter 13 wieder eine Freilaufdiode gegensinnig parallel geschaltet, so dass auch die Freilaufdioden 14 eine einander entgegengesetzte Stromlassrichtung aufweisen. Bei den in den Figuren 1 und 2 gezeigten Choppereinheiten 10 war eine Stromregelung lediglich in einer Richtung, nämlich des Ladestroms möglich, der von der Kondensatoreinheit 3 zum Zusatzenergiespeicher 9 fließt. Bei den Ausführungsbeispielen gemäß Figur 3 und 4 ist hingegen auch eine Regelung des Stromflusses von dem Zusatzenergiespeicher 9 zur Kondensatoreinheit 3 hin bereitgestellt. Mit einer solchen Choppereinheit 10 ist auch die geregelte Abgabe von Wirkleistung von dem Zusatzenergiespeicher an die Kondensatoreinheit 3 möglich.

Das Ausführungsbeispiel gemäß Figur 4 entspricht weitestgehend dem Ausführungsbeispiel gemäß Figur 3. In Figur 4 ist jedoch eine der Freilaufdioden 14 nicht nur parallel auch parallel zur Induktiveinheit 11 geschaltet, so dass ein von dem Zusatzenergiespeicher 9 zur Kondensatoreinheit 3 fließender Strom nicht mehr über die Induktiveinheit 11 fließt.

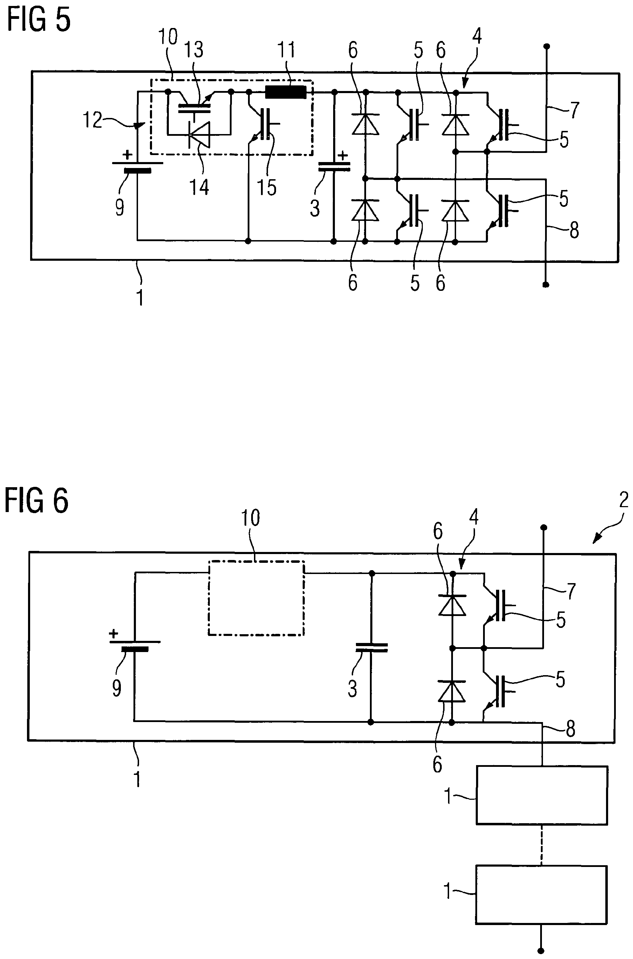

Figur 5 zeigt ein weiteres Ausführungsbeispiel der Choppereinheit 10 für das erfindungsgemäße Submodul 1. Mit Hilfe dieser Choppereinheit 10 ist erreicht, dass der Zusatzenergiespeicher 9 auf eine gegenüber der Kondensatoreinheit 3 höhere Spannung aufgeladen werden kann. Die dargestellte Choppereinheit 10 weist wieder einen elektronischen Schalter 12 auf, der dem in Figur 1 gezeigten Ausführungsbeispiel entsprechend einen abschaltbaren Leistungshalbleiter 13 und eine gegensinnig parallel zu diesem geschaltete Freilaufdiode 14 aufweist. Allerdings ist die Stromdurchlassrichtung des abschaltbaren Leistungshalbleiter 13 und der Freilaufdiode 14 im Vergleich zu ihren Entsprechungen in dem Ausführungsbeispiel gemäß Figur 1 entgegengesetzt. Mit anderen Worten fließt der Diodenstrom hier ungeregelt von der Kondensatoreinheit 3 zu dem Zusatzenergiespeicher 9. Darüber hinaus ist die Induktiveinheit 11 zwischen der Kondensatoreinheit 3 und dem elektronischen Schalter 12 angeordnet, wobei der Potentialpunkt zwischen der Induktiveinheit 11 und dem elektronischen Schalter 12 über einen steuerbaren Aufladungsleistungshalbleiter 15 mit der negativen Seite der Kondensatoreinheit 3 verbunden ist. Der Aufladungsleistungshalbleiter 15 ist somit parallel zur Kondensatoreinheit 3 angeordnet, so dass, wenn sich der Aufladungsleistungshalbleiter 15 in seiner Durchlassstellung befindet, die Kondensatoreinheit 3 über die Induktiveinheit 11 überbrückt, dadurch ein von der Kondensatoreinheit 3 getriebener Strom über die Induktiveinheit 11 fließt und diese auflädt. Der Zusatzenergiespeicher 9 ist in dieser Ausführung zweckmäßigerweise ein Kondensator, ein Superkondensator oder ein Elektrolitkondensator. Der Aufladungsleistungshalbleiter 15 ist über nicht gezeigte Steuerungsleitungen mit einer Aufladungssteuerungs- oder - regelungseinheit verbunden. Aufladungsleistungshalbleiter 15 ist ein abschaltbarer Leistungshalbleiter und kann somit durch eine Steuerungssignal aktiv von seiner Durchgangsstellung in eine Unterbrecherstellung überführt werden, in der eine Stromfluss über den Aufladungsleistungshalbleiter 15 unterbrochen ist.

Im Folgenden wird die Funktionsweise des in Figur 5 dargestellten Submoduls 1 erläutert, das Teil einer Reihenschaltung von Submodulen 1 ist, die ein Stromrichterventil 2 eines Umrichters realisiert. Durch Anlegen einer Wechselspannung an den Umrichter beziehungsweise an das Stromrichterventil 2, deren Amplitude beispielsweise 10 kV oder mehr beträgt, laden sich zunächst die Kondensatoreinheit 3 und der Zusatzenergiespeicher 9 des jeweiligen Submoduls 1 auf. Die Aufladung des Zusatzenergiespeichers 9 erfolgt im Gegensatz zu dem Ausführungsbeispiel gemäß Figur 1 über die Freilaufdiode 14. Die Leistungshalbleiter 5 der Leistungshalbleiterschaltung 4 können nun getaktet werden, um wie beim Stand der Technik unerwünschte Blindleistung im angeschlossenen Stromversorgungsnetz zu kompensieren. Nun kann die an dem Zusatzenergiespeicher 9 abfallende Spannung weiter erhöht werden. Hierfür wird der Aufladungsleistungshalbleiter 15 von einer figürlich nicht dargestellten Steuereinheit in seine Durchlassstellung überführt, in der ein Stromfluss über den Aufladungsleistungshalbleiter 15 ermöglicht ist. Es kommt zu einem Stromfluss in einem Stromkreis, der über die Kondensatoreinheit 3, die Induktiveinheit 11 und den Leistungshalbleiter 15 führt. Der Strom in diesem Stromkreis steigt rampeförmig an, wobei die Induktiveinheit 11 Energie aus der Kondensatoreinheit 3 aufnimmt. Erreicht der Strom in dem besagten Stromkreis einen zuvor festgelegten, gewünschten Schwellenwert, überführt die Steuerungseinheit den Aufladungsleistungshalbleiter 15 in seine Sperrstellung. Dies bewirkt einen Stromfluss in einem zweiten Stromkreis, der von der Induktiveinheit 11 getrieben wird und über die Freilaufdiode 14 und den Zusatzenergiespeicher 9 führt. Schließlich ist die in der Induktiveinheit 11 gespeicherte Energie auf den Zusatzenergiespeicher 9 übertragen, so dass der von der Induktiveinheit 11 getriebene Stromfluss abbricht. Die Spannung an dem Zusatzenergiespeicher 9 steigt entsprechend der von der Induktiveinheit 11 übertragenen Energiemenge an. Dieses Verfahren wird mit Hilfe der nicht dargestellten Steuereinheit so oft wiederholt, bis die an dem Zusatzenergiespeicher 9 abfallende Spannung den gewünschten Wert erreicht hat. Im Bedarfsfall, kann die in dem Zusatzenergiespeicher 9 gespeicherte Energie mittels gezielter Taktung des Leistungshalbleiters 13 des elektronischen Schalters 12 vom Zusatzenergiespeicher 9 auf die Kondensatoreinheit 3 übertragen werden.

Figur 6 zeigt ein weiteres Ausführungsbeispiel eines erfindungsgemäßen Submoduls 1 sowie eines damit aufgebauten Stromrichterventils 2. Es ist erkennbar, dass das Stromrichterventil gemäß Figur 5 wieder aus einer Reihenschaltung von Submodulen 1 besteht, deren Anzahl von der an dem Stromrichterventil 2 beim Betrieb anliegenden Spannung abhängig ist. Jedes Stromrichtermodul umfasst wieder eine Leistungshalbleiterschaltung 4, eine Kondensatoreinheit 3 sowie einen Zusatzenergiespeicher 9, der über eine Choppereinheit 10 mit der Kondensatoreinheit 3 verbunden ist, wobei der Zusatzenergiespeicher 9 parallel zur Kondensatoreinheit 3 angeordnet ist. Die Leistungshalbleiterschaltung 4 ist jedoch im Gegensatz zu der in Figur 1 gezeigten Leistungshalbleiterschaltung als so genannte Halbbrücke ausgebildet. Die Halbbrücke umfasst lediglich zwei abschaltbare Leistungshalbleiter 5, in diesem Falle IGBTs, denen jeweils eine Freilaufdiode gegensinnig parallel geschaltet ist. An den Ausgangsklemmen 7 und 8 ist daher nicht mehr die inverse Kondensatorspannung -U_{C} erzeugbar. Die in Figur 5 gezeigte Halbbrückenschaltung ist auch als so genannte Marquardt-Schaltung in Fachkreisen bekannt, so dass deren Aufbau und Funktionsweise an dieser Stelle nicht genauer beschrieben werden muss.

## Patentansprüche

1. Submodul (1) zur Ausbildung eines mehrstufigen Umrichters für die Elektroenergieverteilung und -übertragung mit einer Kondensatoreinheit (3) und einer Leistungshalbleiterschaltung (4), die abschaltbare Leistungshalbleiter (5) aufweist, wobei die Kondensatoreinheit (3) und die Leistungshalbleiterschaltung (4) so miteinander verbunden sind, dass je nach Ansteuerung der Leistungshalbleiter (5) der Leistungshalbleiterschaltung, wenigstens die an der Kondensatoreinheit (3) abfallende Spannung oder eine Nullspannung an Ausgangsklemmen (7,8) des Submoduls (1) erzeugbar ist, und mit einem Zusatzenergiespeicher,
**dadurch gekennzeichnet, dass** der Zusatzenergiespeicher (9) über eine Choppereinheit (10) mit der Kondensatoreinheit (3) verbunden ist, wobei die Choppereinheit (10) Mittel zum Regeln des Stromflusses zwischen der Kondensatoreinheit (3) und dem Zusatzenergiespeicher (9) aufweist, wobei die Choppereinheit (10) einen elektronischen Schalter (12) und eine in Reihe zum elektronischen Schalter (12) angeordnete Induktiveinheit (11) aufweist und wobei der elektronische Schalter (12) zwei abschaltbare Leistungshalbleiter (13) aufweist, die in Reihe zueinander angeordnet sind, die eine gegensinnige Stromdurchlassrichtung aufweisen und denen jeweils eine Freilaufdiode (14) gegensinnig parallel geschaltet ist, und wobei eine der Freilaufdioden (14) auch parallel zur Induktiveinheit (11) geschaltet ist.

2. Submodul (1) nach Anspruch 1,
**dadurch gekennzeichnet, dass** der Zusatzenergiespeicher (9) parallel zur Kondensatoreinheit (3) geschaltet ist.

3. Submodul (1) nach Anspruch 1,
**dadurch gekennzeichnet, dass** die Induktiveinheit (11) in Durchlassrichtung eines der beiden Leistungshalbleiter (13) des elektronischen Schalters (12) dem elektronischen Schalter (12) nachgeschaltet ist.

4. Submodul (1) nach Anspruch 3,
**dadurch gekennzeichnet, dass** die Induktiveinheit (11) zwischen dem elektronischen Schalter (12) und dem Zusatzenergiespeicher (9) angeordnet ist.

5. Submodul (1) nach einem der vorhergehenden Ansprüche, **dadurch gekennzeichnet, dass** die Leistungshalbleiterschaltung (4) eine Vollbrückenschaltung ist, die vier abschaltbare Leistungshalbleiter (5) aufweist, denen jeweils eine Freilaufdiode (6) gegensinnig parallel geschaltet ist.

6. Submodul (1) nach einem der Ansprüche 1 bis 4, **dadurch gekennzeichnet, dass** die Leistungshalbleiterschaltung (4) eine Halbbrückenschaltung ist, die zwei abschaltbare Leistungshalbleiter (5) aufweist, denen jeweils eine Freilaufdiode (6) gegensinnig parallel geschaltet ist.

7. Submodul (1) nach einem der vorhergehenden Ansprüche, **dadurch gekennzeichnet, dass** die Choppereinheit (10) eine Regelungseinheit aufweist, die mit Messsensoren zur Erfassung einer an dem Zusatzenergiespeicher und an der Kondensatoreinheit abfallenden Spannung eingerichtet sind.

8. Stromrichterventil (2) mit einer Reihenschaltung eines Submoduls (1) gemäß einem der Ansprüche 1 bis 7.

9. Umrichter mit einem Stromrichterventil (2) gemäß Anspruch 8.

## Claims

1. Submodule (1) for forming a multi-stage converter for electrical power distribution and transmission having a capacitor unit (3) and a power semiconductor circuit (4), which has power semiconductors (5) which can be turned off, wherein the capacity unit (3) and the power semiconductor circuit (4) are connected to one another such that at least the voltage which is dropped across the capacitor unit (3) or a zero voltage can be produced at the output terminals (7, 8) of the submodule (1), depending on the drive of the power semiconductors (5) in the power semiconductor circuit, and having an additional energy store,
**characterized in that**
the additional energy store (9) is connected to the capacitor unit (3) via a chopper unit (10), wherein the chopper unit (10) has means for regulation of the current flow between the capacitor unit (3) and the additional energy store (9), wherein the chopper unit (10) has an electronic switch (12) and an inductive unit (11), which is arranged in series with the electronic switch (12) and wherein the electronic switch (12) has two power semiconductors (13) which can be turned off, are arranged in series with one another, have an opposite current flow direction and in each case have a freewheeling diode (14) connected back-to-back in parallel with them, and wherein one of the freewheeling diodes (14) is also connected in parallel with the inductive unit (11).

2. Submodule (1) according to Claim 1,
**characterized in that**
the additional energy store (9) is connected in parallel with the capacitor unit (3).

3. Submodule (1) according to Claim 1,
**characterized in that**
the inductive unit (11) is connected downstream from the electronic switch (12) in the flow direction of one of the two power semiconductors (13) of the electronic switch (12).

4. Submodule (1) according to Claim 3,
**characterized in that**
the inductive unit (11) is arranged between the electronic switch (12) and the additional energy store (9) .

5. Submodule (1) according to one of the preceding claims,
**characterized in that**
the power semiconductor circuit (4) is a full-bridge circuit, which has four power semiconductors (5) which can be turned off, and each of which is connected back-to-back in parallel with a freewheeling diode (6).

6. Submodule (1) according to one of Claims 1 to 4,
**characterized in that**
the power semiconductor circuit (4) is a half-bridge circuit, which has two power semiconductors (5) which can be turned off and each of which have a freewheeling diode (6) connected back-to-back in parallel with them.

7. Submodule (1) according to one of the preceding claims,
**characterized in that**
the chopper unit (10) has a regulation unit, which is designed with measurement sensors for detection of a voltage which is dropped across the additional energy store and across the capacitor unit.

8. Converter valve (2) having a series circuit of a submodule (1) according to one of Claims 1 to 7.

9. Converter having a converter valve (2) according to Claim 8.

## Revendications

1. Sous-module (1) pour constituer un convertisseur à plusieurs niveaux pour la distribution et le transport d'énergie électrique, comprenant une unité (3) de condensateur et un circuit (4) à semi-conducteurs de puissance, qui a des semi-conducteurs (5) de puissance pouvant être bloqués, l'unité (3) de condensateur et le circuit (4) à semi-conducteurs de puissance étant reliés l'un à l'autre de manière à ce que, après la commande des semi-conducteurs (5) de puissance du circuit à semi-conducteurs de puissance, au moins la tension chutant aux bornes de l'unité (3) de condensateur ou une tension nulle peut être produite aux bornes (7, 8) de sortie du sous-module (1), et comprenant un accumulateur d'énergie supplémentaire,
**caractérisé en ce que**
l'accumulateur (9) d'énergie supplémentaire est relié à l'unité (3) de condensateur par une unité (10) de découpeur, l'unité (10) de découpeur ayant des moyens de régulation du flux de courant entre l'unité (3) de condensateur et l'accumulateur (9) d'énergie supplémentaire, l'unité (10) de découpeur ayant un interrupteur (12) électronique et une unité (11) inductive montée en série avec l'interrupteur (12) électronique et l'interrupteur (12) électronique ayant deux semi-conducteurs (13) de puissance pouvant être bloqués, qui sont montés en série l'un avec l'autre, qui ont des sens directs opposés et avec lesquels est montée, respectivement, en parallèle en sens contraire, une diode (14) de roue libre, et dans lequel l'une des diodes (14) de roue libre est monté également en parallèle avec l'unité (11) inductive.

2. Sous-module (1) suivant la revendication 1,
**caractérisé en ce que**
l'accumulateur (3) d'énergie supplémentaire est monté en parallèle avec l'unité (3) de condensateur.

3. Sous-module (1) suivant la revendication 1,
**caractérisé en ce que**
l'unité (11) inductive est, dans le sens de conduction directe de l'un des deux semi-conducteurs de puissance de l'interrupteur (12) électronique, montée après l'interrupteur (12) électronique.

4. Sous-module (1) suivant la revendication 3,
**caractérisé en ce que**
l'unité (11) inductive est montée entre l'interrupteur (11) électronique et l'accumulateur (9) d'énergie supplémentaire.

5. Sous-module (1) suivant l'une des revendications précédentes, **caractérisé en ce que**
le circuit (4) à semi-conducteurs de puissance est un circuit à pont complet, qui a quatre semi-conducteurs (5) de puissance pouvant être bloqués, avec chacun desquels est montée en parallèle en sens contraire une diode (6) de roue libre.

6. Sous-module (1) suivant l'une des revendications 1 à 4,
**caractérisé en ce que**
le circuit (4) à semi-conducteurs de puissance est un circuit en demi-pont, qui a deux semi-conducteurs (5) de puissance pouvant être bloqués avec chacun desquels est montée en parallèle en sens contraire une diode (6) de roue libre.

7. Sous-module (1) suivant l'une des revendications précédentes, **caractérisé en ce que**
l'unité (20) de découpage a une unité de régulation, qui est équipée de capteurs de mesure pour détecter une tension chutant aux bornes de l'accumulateur d'énergie supplémentaire et de l'unité de condensateur.

8. Soupape (2) de convertisseur ayant un circuit série d'un sous-module (1) suivant l'une des revendications 1 à 7.

9. Convertisseur ayant une soupape (2) de convertisseur suivant la revendication 8.
